# FASCICULE DE BREVET EUROPEEN

(11) **EP 3 670 331 B1**
(45) Date de publication et mention de la délivrance du brevet: **27.07.2022**
(21) Numéro de dépôt: 19219171.6
(22) Date de dépôt: 20.12.2019
(51) Int. Cl.: B64C 9/24, B64C 9/02, B64C 9/14, B64C 3/18

(54) **ELÉMENT DE VOILURE AVEC UN ELÉMENT MOBILE**
TRAGFLÄCHE MIT EINEM BEWEGLICHEN ELEMENT
WING ELEMENT HAVING A MOBILE ELEMENT

(30) Priorité: 20.12.2018 FR 1873715
(43) Date de publication de la demande: 24.06.2020
(73) Titulaire: Daher Aerospace, 41400 Saint Julien De Chedon (FR)
(72) Inventeur: HERMEL, Pascal, 37100 Blagnac (FR); CLECH, David, 31200 Toulouse (FR); GAUTRAND, Luc, 31860 Labarthe Sur Leze (FR); BAUVIR, François, 31170 Colomiers (FR); CAZELLES, Arnaud, 31000 Toulouse (FR)
(74) Mandataire: Ipside

(56) Documents cités:
- US-A1- 2014 166 818
- US-A1- 2015 259 061
- US-A1- 2017 233 061

## Description

### Domaine technique

L'invention concerne un élément de voilure d'un aéronef, notamment une aile, comprenant un élément mobile de voilure tel qu'un bec basculant de bord d'attaque, ou « *slat* », de conception optimisée.

Ces éléments mobiles de voilure permettent par leur déplacement de modifier l'écoulement de l'air autour de la voilure, pour en modifier la portance ou pour diriger l'aéronef.

Ainsi, les slats présents sur une aile d'aéronef permettent par leur déplacement contrôlé de modifier l'écoulement aérodynamique autour de l'aile et d'en modifier la portance à une vitesse donnée.

Un avion comprend plusieurs de ces surfaces mobiles réparties sur les voilures, tant sur les ailes que sur les plans horizontaux ou verticaux de dérive. Ainsi, un avion de transport civil comprend généralement 3 à 5 slats répartis sur le bord d'attaque depuis l'emplanture de l'aile jusqu'au saumon, lesquels suivent l'évolution de la section de l'aile entre ses deux extrémités.

Sur les plans horizontaux, ces éléments mobiles constituent des surfaces de portances. Un slat est ainsi une surface portante de la voilure qui peut récupérer, à une position d'envergure donnée, jusqu'à 30 % de la portance totale de la section de voilure.

### Technique antérieure

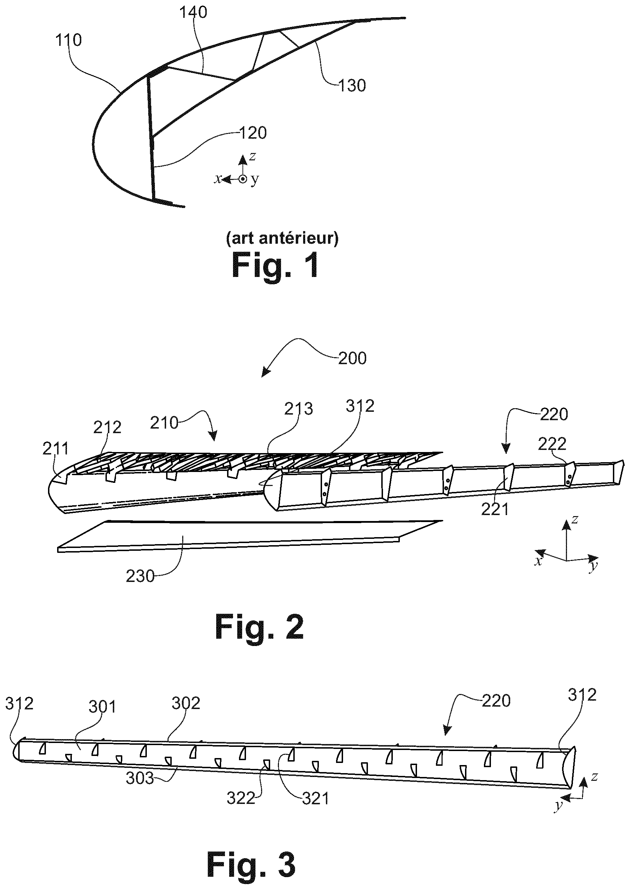

La figure 1 représente schématiquement la section, dans le plan *x-z* d'un slat selon l'art antérieur. Le système d'axe représenté est celui de l'avion le fuselage s'étend parallèlement à l'axe *x* et la voilure essentiellement selon l'axe *y.*

Un tel slat comprend une peau extrados (110) s'étendant depuis le bord d'attaque (bec) jusqu'au bord de fuite. Laquelle, selon certains modes de réalisation, est constituée de plusieurs parties.

Un longeron (120) assemblé à la peau extrados (110) auquel sont liées des nervures.

Une peau intérieure (130) liée à la peau d'extrados (110) par l'intermédiaire d'un système de raidissement (140) tel que des lisses, des nervures, voire une structure en nid d'abeille selon le mode de réalisation.

Plusieurs nervures (non représentées) réparties selon l'axe y, sont liées au longeron et à la peau extrados réalisant une structure en caisson, tant du côté du bord d'attaque que du côté du bord de fuite.

Le slat est lié à l'aile par l'intermédiaire d'une ou plusieurs ferrures d'interface (non représentées) connectées par l'intermédiaire de bras ou de rails de manœuvre à des moyens actionneurs, mécaniques ou hydrauliques, pour réaliser le déplacement relatif contrôlé du slat par rapport à l'aile.

La structure schématiquement représentée figure 1 correspond à un exemple de construction métallique, mais les constructions en composite de l'art antérieur sont similaires.

Cette conception mécanique a peu évolué.

En termes de rigidité, un slat doit être suffisamment rigide pour résister aux efforts aérodynamiques.

Les efforts aérodynamiques subis par le slat sont transférés à la voilure via les ferrures d'interface et les rails ou bras de manoeuvre qui doivent être dimensionnés en conséquence selon le nombre de ferrures.

Lorsqu'un slat est lié à l'aile par plus de deux ferrures d'interface, les différences de déformée entre l'aile et le slat produisent des surcontraintes dans les ferrures d'interface et les éléments de manoeuvre, d'autant plus importantes que le nombre de ferrures d'interface est élevé.

Lorsque la liaison du slat avec l'aile comprend plus de deux ferrures, ce qui est fréquent, le montage est hyperstatique. Cet hyperstatisme combiné aux différences de déformées est responsable de la moitié des efforts auxquels sont soumises lesdites ferrures et le slat, le reste provenant du chargement aérodynamique.

Ce phénomène oblige à dimensionner les ferrures d'interface et les moyens de manœuvre, en conséquence ce qui a une influence sur la masse, et augmente les risques de grippage ou de coincement, qui doivent être pris en compte dans le dimensionnement.

En outre, les déformations du slat sous l'effet des chargements aérodynamiques produisent du bruit, principalement dans des fréquences relativement aigües auxquelles l'oreille humaine est très sensible, de sorte que le slat devrait être suffisamment rigide pour minimiser ces déformations dans une limite acceptable.

Ainsi, un slat, et plus généralement un élément mobile de voilure, doivent répondre à des exigences mécaniques contradictoires, ils devraient être les plus souples possible pour suivre la déformation de l'aile et limiter les surcontraintes dans le ferrures d'interface et les plus rigides possibles vis-à-vis du chargement aérodynamique.

A ces contraintes contradictoires s'ajoutent les contraintes de masse, inhérentes à toute application aéronautique, et celles relatives au coût de fabrication. Un slat étant composé de nombreuses pièces assemblées (peaux, raidisseurs de formes diverses, ferrures d'interface etc. ) toutes ces pièces relevant de procédés de fabrication différents : formage de tôles, de profilés, usinage, rivetage, soudage etc.

Les problèmes techniques décrits ci-avant pour un bec mobile de bord d'attaque ou slat, sont partagés par tous les éléments mobiles de voilure.

Le document US 2015/259061 décrit une structure de slat optimisée afin de limiter les effets inhérents à la déformation différentielle du slat et de la voilure et donne par ailleurs des indications sur les chargements subis par cette pièce au cours de son fonctionnement.

Le document US 2014/ 166818 décrit un élément mobile de voilure dans lequel la peau de bord de fuite et la peau d'extrados sont raidies par des raidisseurs alignés avec l'envergure de la voilure.

### Exposé de l'invention

L'objectif de l'invention est de proposer un élément de voilure d'aéronef comprenant un élément mobile et notamment un slat, pour lequel ledit élément mobile soit à la fois, plus léger, comprenne moins de pièces élémentaires à assembler et réponde de manière améliorée aux contraintes contradictoires concernant sa rigidité.

A cette fin l'invention concerne un élément de voilure pour un aéronef, notamment une aile, comprenant un élément mobile de voilure , notamment un bec de bord d'attaque, adapté à l'élément de voilure et connecté à celui-ci par des ferrures d'interface, lequel élément mobile de voilure est soumis au cours de son utilisation à un chargement aérodynamique, l'aéronef définissant un repère comprenant un axe principal de fuselage *x* et un axe d'envergure *y*, l'élément de voilure procurant une portance selon un axe z, perpendiculaires entre eux, l'élément de voilure se déformant sous l'effet du chargement aérodynamique principalement sous la forme d'une flexion produisant une flèche selon l'axe z et une déformée sensiblement dans le plan *y*-*z* déplaçant les ferrures d'interface selon l'axe *z*, une déformée en flexion de l'élément mobile de voilure sous l'effet du chargement aérodynamique formant des ventres entre les ferrures d'interface en flèche parallèlement à *z*, ledit élément mobile de voilure étant constitué d'une structure en caisson et comprenant une peau d'extrados nervurée comprenant une peau de bord de fuite, un longeron s'étendant selon l'axe y assemblé à la peau d'extrados, une peau intérieure assemblée à la peau de bord de fuite et au longeron, dans lequel des caissons délimités par des nervures réparties selon l'axe y, s'étendant entre la peau de bord de fuite et la peau intérieure, lesquelles nervures coopèrent avec des nervures du longeron et les ferrures d'interface pour la liaison avec l'élément de voilure, dans lequel la peau de bord de fuite de la peau extrados est raidie par des raidisseurs de forme biomimétique comprenant des motifs de raidissement répartis sur toute la surface de la peau de bord de fuite, lesdits raidisseurs étant configurés de sorte à ménager, entre deux nervures liés à des ferrures d'interface, par le raidissement ainsi obtenu, au moins une zone de discontinuité, non raidie, formée entre deux motifs de raidissement séparés l'un de l'autre et centrée sur la zone d'annulation du moment de flexion engendré par le chargement aérodynamique de l'élément de voilure.

Ainsi, l'élément de voilure objet de l'invention utilise un raidissement biomimétique sur toute la surface de la peau de bord de fuite de l'élément mobile de voilure, ce qui permet d'obtenir un raidissement variable, favorisant par la création de zones de souplesse, la capacité de suivi de la déformée de l'aile, réduisant ainsi les contraintes engendrées par l'incompatibilité des déformations de l'aile et de l'élément mobile de voilure, sans compromettre la rigidité dudit élément vis-à-vis des efforts aérodynamiques, la souplesse étant installée dans des zones de moment de flexion nul en regard du chargement aérodynamique.

L'invention est mise en œuvre selon les modes de réalisation et les variantes exposés ci-après lesquels sont à considérés individuellement ou selon toute combinaison techniquement opérante.

Avantageusement, les raidisseurs de forme biomimétique de la peau de bord de fuite de l'élément mobile de voilure, sont organisés selon l'axe y en alternant un motif dit de ferrure d'interface au voisinage de l'emplacement des ferrures d'interface et un motif dit de ventre entre les ferrures d'interface, la zone de discontinuité de raidissement se situant entre un motif de ferrure d'interface et un motif de ventre et ne comprenant aucun raidisseur lié à l'un de ces motifs.

Selon un exemple de réalisation, chaque motif de raidissement comprend des raidisseurs dits de première catégorie, sensiblement parallèle à *x,* reprenant la flexion globale de la peau d'extrados, des raidisseurs de deuxième catégorie reprenant la flexion et la torsion locales de la peau, et des raidisseurs de troisième catégorie stabilisant la peau vis-à-vis du flambage local.

Selon un mode de réalisation avantageux, la peau d'extrados de l'élément mobile de voilure comprend une tôle et les nervures et raidisseurs de la peau d'extrados sont rapportés par un procédé de fabrication additive sur ladite tôle. Ce mode de réalisation permet de réduire le coût de fabrication de l'élément mobile de voilure objet de l'invention, d'augmenter la précision de réalisation et de réduire la masse.

Avantageusement, le longeron de l'élément mobile de voilure est un profilé comprenant une semelle côté intrados et une semelle côté extrados et une âme entre lesdites semelles, les semelles étant liées à la peau d'extrados et étant rapportées sur l'âme par un procédé de fabrication additive. Ce mode de réalisation permet d'obtenir une adaptation parfaite de la forme des semelles à la peau à laquelle elles sont assemblées.

Avantageusement, le longeron de l'élément mobile de voilure comprend des nervures rapportées sur l'âme par un procédé de fabrication additive.

Selon un mode de réalisation l'élément mobile de voilure est un slat et la peau d'extrados se prolonge jusqu'au bord d'attaque, le longeron comprenant des raidisseurs, côté bord d'attaque, sous la forme de demi-nervures, réparties de manière alternée selon l'axe y et liées alternativement au côté extrados et au côté intrados de la peau d'extrados. Ces nervures réalisent une structure en caisson dans le bord d'attaque (bec) reprenant les efforts tranchant dans le plan *x*-*z*, et stabilisant cette partie vis-à-vis du flambage. L'utilisation de demi-nervures permet de répartir spatialement celles-ci selon l'axe y pour une meilleure stabilité au flambage local sans augmenter la masse.

Avantageusement les demi-nervures sont réparties selon l'axe y selon un pas variable augmentant dans un sens allant de l'emplanture de l'aile au saumon. Cette disposition permet de réduire la masse.

Selon un mode réalisation, les demi-nervures sont de forme biomimétique ajourée. Ce mode de réalisation, rendu possible par l'utilisation de la fabrication additive, permet de réduire encore la masse.

### Description sommaire des dessins

L'invention est exposée ci-après selon ses modes de réalisation préférés nullement limitatifs et en références aux figures 1 à 7 dans lesquelles :
[fig.1] la figure 1 relative à l'art antérieur représente, selon une vue en section, un exemple schématique de réalisation d'un slat selon l'art antérieur ;
[fig. 2] la figure 2 montre selon une vue en perspective et en éclaté un exemple de réalisation d'un slat selon l'invention ;
[fig. 3] la figure 3 représente selon une vue de face un exemple de réalisation du longeron du slat de la figure 2 ;
[fig. 4] la figure 4, relative à l'art antérieur représente schématiquement la décomposition des déformations auxquelles est soumis un slat ;
[fig. 5] la figure 5 montre en vue de dessous un exemple de réalisation de la peau d'extrados du slat selon l'invention ;
[fig. 6] la figure 6 représente schématiquement la combinaison des déformées et des sollicitation de flexion sur la peau de bord de fuite du slat selon l'invention.
[fig. 7] et la figure 7 montre selon une vue partielle en perspective un exemple d'optimisation topologique des nervures côté bord d'attaque d'un slat selon un exemple de réalisation de l'invention.

### Meilleure manière de réaliser l'invention

L'invention est ici présentée dans le cas de la réalisation d'un bec mobile de voilure ou slat, l'homme du métier adapte facilement les principes ici présentés dans le cas d'un autre élément mobile de voilure.

Les termes « slat » et « bec mobile de voilure » sont utilisés de manière interchangeable.

Figure 2, selon un exemple de réalisation, l'élément mobile de voilure (200) selon l'invention comprend 3 sous-ensembles (210, 220, 230) assemblés entre eux par des techniques connues de l'art antérieur telles que rivetage ou soudage.

La peau d'extrados (210) comprend une tôle formée, d'épaisseur sensiblement constante selon un exemple de réalisation, comprenant côté bord d'attaque, la forme du bec et prolongée par une partie (213) vers le bord de fuite, dite peau de bord de fuite (213), dont la forme est adaptée à la forme extrados de la surface de l'aile.

La peau d'extrados est préférentiellement constituée à partir d'une seule tôle s'étendant du bord d'attaque au bord de fuite. Alternativement elle est formée de deux pièce assemblées entre-elles.

Dans tous les cas, la peau d'extrados (210) du slat selon l'invention constitue une surface continue dans toutes les directions (x,y,z) préférentiellement d'une seule pièce, du bord d'attaque au bord de fuite sans rainure ou autre discontinuité physique.

La peau d'extrados (210) est rigidifiée sur sa partie intérieure par des nervures (211), 7 nervures sur cet exemple de réalisation, et des raidisseurs en protrusion (212) organisés selon des motifs biomimétiques sur la peau de bord de fuite (213).

Avantageusement, les raidisseurs (212) biomimétiques et avantageusement les nervures (211) sont rapportés sur la tôle par un procédé de fabrication additive. Les procédés de fabrication additive de fusion par faisceau d'électron (EBAM^{®}), CMT^{®} (*Cold Metal Transfer*), TopTig^{®}, CLAD^{®} (*Construction Laser Additive Directe*), ou WAAM^{®} (*Wire Arc Additive Manufacturing*) sont des procédés, non limitatifs, adaptés à cette opération. Selon des exemples de mises en œuvre, cette phase de fabrication additive est associée à une phase d'usinage par enlèvement de matière pour obtenir les formes et la précision désirées.

Les exemples de réalisation exposés ci-après concernent une construction métallique. Cependant une construction composite mettant en œuvre les mêmes principes essentiels est parfaitement envisageable.

A titre d'exemple non limitatif, dans le cas d'une construction composite la peau d'extrados, le longeron et la peau intérieur, sont des structures stratifiées à renforts continus, par exemple sous la forme de fibres de carbones dans une matrice thermodurcissable ou thermoplastique, de même que les nervures, rapportées par cocuisson ou par soudure, et les raidisseurs biomimétiques sont constitués d'un composite thermoplastique à fibres courtes, rapportées par surmoulage ou par un procédé de fabrication additive.

Le longeron (220), est constitué d'un profilé sensiblement en U, comprenant une âme constituée d'une tôle forte s'étendant selon l'axe y selon sa plus grande dimension, et deux semelles pour sa liaison avec la peau d'extrados. Il comprend, côté intérieur, des nervures (221, 222), 7 selon ce mode de réalisation, s'étendant sensiblement dans le plan *x*-*z*, venant en prolongement des nervures (211) de la peau d'extrados auxquelles elles sont liées.

Une partie de ces nervures (222), 3 selon cet exemple de réalisation, sont des ferrures d'interface, qui relient par l'intermédiaire de bras ou de rails de manœuvre le slat à l'aile de l'aéronef.

La peau intérieure (230) est fixée par rivetage ou soudage sur les raidisseurs (211) de la peau extrados (210) et sur le longeron (220).

Ainsi, la peau d'extrados dans sa partie peau de bord de fuite (213) et la peau intérieure (230) constituent, après assemblage, une structure en caisson, les caissons étant délimité par les nervures (211) liées à la peau d'extrados et à la peau intérieure.

Dans le cas d'une structure mobile autre qu'un slat, par exemple un volet, la peau intérieure est une peau d'intrados, liée à la peau d'extrados selon le même principe de sorte à constituer une structure en caisson, cette peau intrados étant par exemple également raidie par un réseau de raidisseurs biomimétiques.

Figure 3, le longeron (220) comprend une âme (301) et deux semelles (302, 303) lesquelles sont liées à la peau d'extrados sur la face interne de celle-ci.

Avantageusement, les semelles (302, 303) sont rapportées sur l'âme par un procédé de fabrication additive, optionnellement associé à un procédé de finition par enlèvement de matière. Ce mode de réalisation permet une adaptation parfaite de la forme des semelles (302, 303) à la forme de la peau à laquelle elles sont assemblées.

Sur sa face côté bord d'attaque, et entre les nervures d'extrémités (312), le longeron comprend une pluralité de demi-nervures (321, 322) disposées en alternance du côté extrados (321) et du côté intrados (322) et qui sont liées au bord d'attaque de la peau d'extrados, constituant ainsi une structure en caisson du bord d'attaque.

Cette disposition des demi-nervures (321, 322) permet de stabiliser le bord d'attaque vis-à-vis de l'effort tranchant et du flambage localisé.

Avantageusement, les demi-nervures (321, 322) sont rapportées sur le longeron par un procédé de fabrication additive associé à un procédé de finition par enlèvement de matière.

Ainsi, dans un mode de réalisation mettant en œuvre des procédés de fabrication additive pour le longeron et la peau d'extrados, le slat selon l'invention est dit « imprimé » et consiste en trois sous-ensembles intégraux, limitant considérablement les opérations d'assemblage en comparaison des solutions constructives de l'art antérieur.

La limitation des opérations d'assemblage et de repositionnement augmentent la précision de réalisation et réduisent la masse toujours en comparaison des solutions de l'art antérieur.

Finalement, le nombre d'outillages nécessaires à la réalisation du slat est également considérablement réduit.

Au cours de son utilisation, le slat est soumis à un chargement combiné produisant 3 déformations principales, une déformation de flexion globale produisant une flèche selon l'axe *z,* une déformation de torsion globale autour de l'axe *y* et une déformation de flexion du bord de fuite, produisant une flèche dudit bord de fuite selon l'axe *z* avec une déformée sensiblement dans le plan *x-z.*

Les raidisseurs et nervures ont pour objet de rigidifier le slat vis-à-vis de ces sollicitations, de reprendre les efforts correspondants et de les diriger vers l'aile via les ferrures d'interface.

L'aile elle-même se déforme sous l'effet du chargement aérodynamique, également selon un mode combiné, mais principalement sous la forme d'une flexion produisant une flèche selon l'axe z et une déformée sensiblement dans le plan *y-z.*

La sollicitation de torsion globale est reprise par la structure en caisson, tant côté bord d'attaque que côté bord de fuite.

La sollicitation de flexion globale est reprise principalement par le longeron.

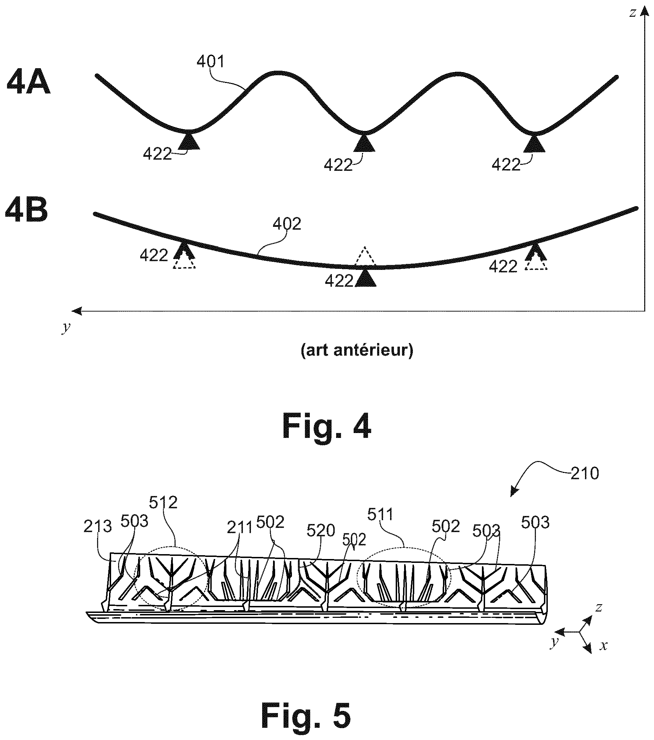

La figure 4 relative à l'art antérieur, illustre le phénomène de la combinaison des déformations auxquelles est soumis un slat comprenant trois ferrures d'interface.

Les ferrures d'interface (422), liées à l'aile, constituent des points d'ancrage rigides.

La figure 4A ne prend pas en compte la déformée de l'aile. Sous l'effet du chargement aérodynamique, le slat se déforme selon une déformée (401) en créant des ventres de déformation entre lesdits points d'ancrage (ferrures d'interface).

La figure 4B ne prend pas en compte la déformation dues aux effets aérodynamiques de la figure 4A. La déformation de l'aile produit une déformée (402) déplaçant les points d'ancrage, c'est-à-dire la position des ferrures d'interface (422) dont la position initiale est représentée en pointillés.

La combinaison de ces effets conduit à des efforts importants sur les ferrures d'interface et sur les mécanismes de commande de basculement du slat. A titre d'exemple les efforts imposés sur la ferrure d'interface centrale par le chargement aérodynamique sont dirigés vers les z positifs, alors que les efforts imposés par la déformée de l'aile sur cette même ferrure centrale sont dirigés vers les z négatifs. Cette combinaison soumet ladite ferrure et les moyens de manœuvre à des sollicitations très importantes. D'autant plus importants que la rigidité du slat en flexion est élevée.

Figure 5, selon un exemple de réalisation, le raidissement biomimétique de la peau de bord de fuite (213) comprend essentiellement deux motifs : un motif (512) de ferrures d'interface sensiblement centré sur les nervures (211) de la peau d'extrados prolongeant les ferrures d'interface du longeron, et un motif (511) dit de ventre, également centré sur une nervure (211) entre les motifs de ferrure d'interface, ladite nervure n'étant pas connectée à un ferrure d'interface.

Ce dernier motif (511) est dit « de ventre » car il est située dans une zone de la peau du bord de fuite dont la déformation en flexion décrit un ventre, lorsque l'élément mobile de voilure est soumis au chargement aérodynamique engendré par le déplacement de l'aéronef.

Les raidisseurs biomimétiques, coopèrent avec la peau et comprennent trois catégories de raidisseurs. Les raidisseurs de première catégorie (211) constitués par les nervures reprennent la flexion globale de la peau d'extrados. Les raidisseurs de deuxième catégorie (502) reprennent la flexion locale et la torsion de la peau de bord de fuite, et les raidisseurs de troisième catégorie (503) stabilisent la peau de bord de fuite vis-à-vis du flambage local. Chaque motif (511, 512) comprend des raidisseurs de chacune de ces catégories selon cet exemple de réalisation.

Les raidisseurs biomimétiques de deuxième catégorie (502) sont orientés de manière oblique au voisinage des nervures (211) pour maximiser la rigidité en torsion de la peau de bord de fuite.

L'organisation des motifs (511, 512) de raidissement est telle qu'une zone (520) de discontinuité de raidissement est créée entre chaque les motif (512) de ferrure d'interface et chaque motif (511) de ventre. Cette zone de discontinuité est une zone de déformation privilégiée du slat, située entre deux motifs de raidissement et exempte de raidisseur lié à l'un ou l'autre de ces motifs de raidissement. En l'absence d raidisseurs connectés au motifs de raidissement (511, 512) Ces caractéristiques conférant une certaine souplesse pour lui permettre de suivre la déformée de l'aile sans engendrer d'efforts d'incompatibilité de déformation au niveau des ferrures d'interface.

En revanche la disposition des raidisseur biomimétiques assure la rigidité de la peau de bord de fuite vis-à-vis de sa déformée dans le plan *x*-*z*.

Ainsi le raidissement obtenu combine une rigidité importante de la peau de bord de fuite vis-à-vis du chargement aérodynamique et une souplesse vis-à-vis de la déformation de l'aile.

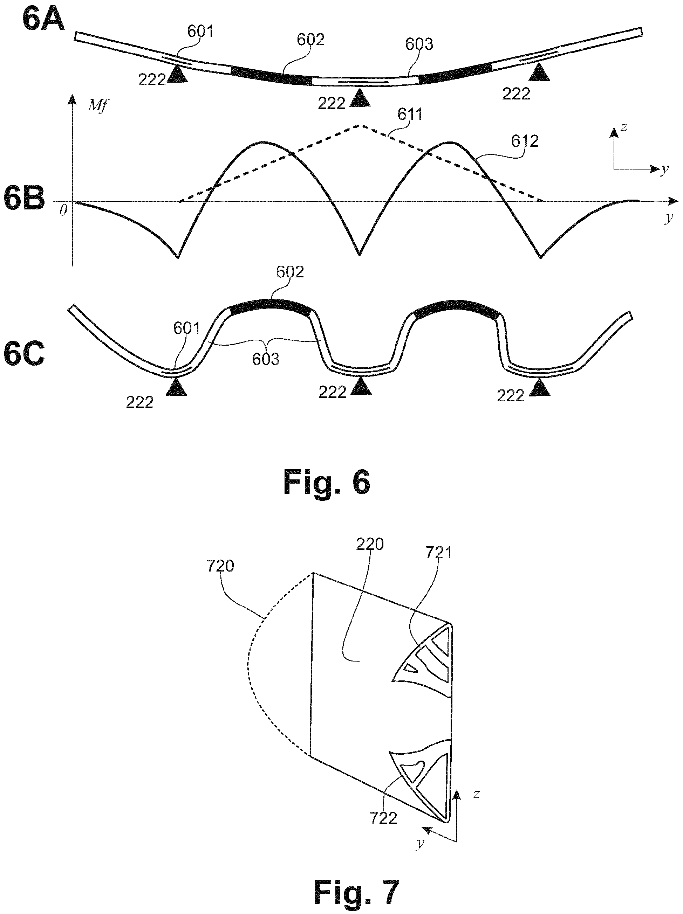

La figure 6, représente de manière schématique similaire à la figure 4, les effets combinés du chargement aérodynamique, figure 6C, et de la flexion de l'aile, figure 6A, sur la déformée de la peau de bord de fuite et de la peau intérieure du slat objet de l'invention, en distinguant les zones (601) au voisinage des ferrures d'interface (222), les zones de ventre (602) présentant une flèche selon *z,* et les zones (603) de discontinuité de raidissement.

Les caractéristiques de chargement d'une aile et d'un élément mobile par les effets aérodynamiques sont généralement connues de l'art antérieur.

Les caractéristiques de distribution du moment de flexion et des autres modes de chargement ainsi que les déformées des éléments en présence sous l'effet de ces chargements sont calculables et calculés par tout programme de calcul adapté, notamment par éléments finis, connus de l'homme du métier.

La figure 6B, donne l'allure du moment de flexion (*Mf*) engendré par la flexion de l'aile (611), et du moment de flexion (612) engendré par le chargement aérodynamique.

Ainsi les zones (603) de discontinuité de raidissement sont centrées sur les régions où le moment de flexion (612) engendré par le chargement aérodynamique s'annule.

En revenant à la figure 5, bien que la peau du bord de fuite du slat selon l'invention présente des zones de discontinuité de raidissement, favorisant sa souplesse vis-à-vis du suivi des déformations de l'aile, les raidisseurs biomimétiques sont répartis sur toute la surface de la peau de bord de fuite, ce qui évite les effets de matelassage, c'est-à-dire de déformation plus marquée entre les raidisseurs, constatés pour certaines solutions de l'art antérieur sous chargement.

Figure 7, selon un exemple de réalisation les nervures côté bord d'attaque d'un slat selon l'invention, s'étendant entre le longeron (220) et la peau d'extrados, sont optimisées selon une optimisation topologique combinée à une conception mettant en œuvre des principes biomimétiques.

Ainsi une nervure de bord d'attaque complète selon l'art antérieur (720 - représentée en pointillé) peut être réduite à deux tiers de nervures ajourées (721, 722).

De telles nervures optimisées sont réalisables par un procédé associant la fabrication additive et l'usinage par enlèvement de matière.

La stabilisation du bord d'attaque vis-à-vis du flambage localisé est d'autant plus efficace que les nervures sont rapprochées l'une de l'autre selon l'axe *y.*

Ainsi, en utilisant des demi-nervures (321, 322) alternées comme représentées figure 3, ou des tiers de nervures ajourées (721, 722) également réparties de manière alternée selon l'axe *y,* la stabilisation vis-à-vis du flambage local est améliorée sans augmenter la masse par rapport à une solution utilisant des nervures complètes (720) de l'art antérieur.

De plus, à iso épaisseur de peau d'extrados et objectif de flèche maximal constant, la distance nécessaire entre deux demi-nervures alternées augmente depuis l'emplanture de l'aile jusqu'au saumon.

Ainsi, les demi-nervures alternées sont, selon un exemple de réalisation, réparties selon un pas croissant selon l'axe *y* depuis l'emplanture de l'aile jusqu'au saumon.

La détermination de ce pas et de sa variabilité est obtenue par des simulations numériques de la déformée sous charge.

Les solutions de l'art antérieur utilisent pour un slat, ou de manière plus générale pour une structure mobile de voilure, différents modes de raidissement qui peuvent être classées globalement en deux catégories architecturales : la première catégorie comprend un raidissement de l'ensemble du slat par des nervures s'étendant de le plan *x-y,* et la deuxième catégorie, un raidissement combinant des nervures dans le plan *x-y* au niveau du bord d'attaque et un raidissement par des lisses s'étendant selon l'axe *y* au niveau de la peau de bord de fuite.

En comparaison de ces deux catégories architecturales la flexion de la peau de bord de fuite du slat selon l'invention est réduite de l'ordre de 40 % améliorant ainsi la performance aérodynamique, le flambage local est amélioré sur la totalité de la surface aérodynamique du slat en raison d'une meilleure distribution des raidisseurs, en particulier sur la peau de bord de fuite.

En même temps, en comparaison des solutions de l'art antérieur, à iso déformée totale, les efforts aux interfaces sont réduits de 20 %, ou, pour une même valeur des efforts aux interfaces la déformée totale est réduite de 20 %. Ainsi, un avantage moyen de 10 % est obtenu tant sur la déformée totale que sur les efforts d'interface. Dans ces conditions, la masse est réduite de 5 %.

Ainsi, construite selon les principes de l'invention la structure mobile de voilure améliore les performances aérodynamiques sans pénaliser voire en améliorant les efforts d'interfaces engendrés par les incompatibilités de déformation, comparativement aux solutions de l'art antérieur.

Dans un mode de réalisation mettant en œuvre un procédé de fabrication additive pour la réalisation du raidissement, le nombre de sous-ensembles constitutifs du slat selon l'invention est considérablement réduit passant de 22 pour les solutions de l'art antérieur à 3, le nombre d'outillages nécessaires passant de 21 à 3.

Ainsi, construite selon les principes de l'invention, la structure mobile de voilure réduit les immobilisations nécessaires à sa réalisation.

Au-delà de la forte intégration de fonctions, l'utilisation de la fabrication additive permet une adaptation plus précise des formes des éléments assemblés. Selon un exemple de réalisation, il est par exemple possible d'adapter, en trois dimensions, la forme des semelles du longeron à la forme exacte de la peau d'extrados, obtenue par une mesure.

Cette capacité d'adaptation simplifie les assemblages et en réduit les coûts.

Les exemples de réalisation montrent que l'invention atteint le but visé et permet la réalisation d'une structure mobile de voilure plus performante d'un point de vue aérodynamique pour un coût de réalisation réduit en comparaison des solutions de l'art antérieur.

## Revendications

1. Elément de voilure d'un aéronef, notamment une aile, comprenant un élément mobile de voilure (200), notamment un bec de bord d'attaque, adapté à l'élément de voilure et connecté à celui-ci par des ferrures d'interface (222, 422), lequel élément de voilure est soumis au cours de son utilisation à un chargement aérodynamique, l'aéronef définissant un repère comprenant un axe principal de fuselage *x* et un axe d'envergure *y,* l'élément de voilure procurant une portance selon un axe *z,* perpendiculaires entre eux, l'élément de voilure se déformant sous l'effet du chargement aérodynamique principalement sous la forme d'une flexion produisant une flèche selon l'axe *z* et une déformée sensiblement dans le plan *y-z* déplaçant les ferrures d'interface (422, 222) selon l'axe *z*,une déformée en flexion (401) de l'élément mobile de voilure sous l'effet du chargement aérodynamique formant des ventres (602) entre les ferrures d'interface (222, 422) en flèche parallèlement à *z,* ledit élément mobile de voilure (200) étant constitué d'une structure en caisson et comprenant une peau d'extrados (210) nervurée comprenant une peau de bord de fuite (213), un longeron (220) s'étendant selon l'axe *y* assemblé à la peau d'extrados, une peau intérieure (230) assemblée à la peau de bord de fuite et au longeron, dans lequel des caissons délimités par des nervures (211) réparties selon l'axe *y,* s'étendant entre la peau de bord de fuite et la peau intérieure, lesquelles nervures coopèrent avec des nervures du longeron (221) et les ferrures d'interface (222) pour la liaison avec l'élément de voilure, **caractérisé en ce que** la peau de bord de fuite (213) de la peau extrados (210) est raidie par des raidisseurs (212) de forme biomimétique comprenant des motifs de raidissement (511, 512) répartis sur toute la surface de la peau de bord de fuite, lesdits raidisseurs étant configurés de sorte à ménager, entre deux nervures (211) liés à des ferrures d'interface (222), par le raidissement ainsi obtenu, au moins une zone de discontinuité (520), non raidie, formée entre deux motifs de raidissement séparés l'un de l'autre et centrée sur la zone d'annulation du moment de flexion (612) engendré par le chargement aérodynamique de l'élément de voilure.

2. Elément de voilure selon la revendication 1, dans lequel les raidisseurs (212) de forme biomimétique de la peau de bord de fuite (213) de l'élément mobile de voilure (200), sont organisés selon l'axe y en alternant un motif (512) dit de ferrure d'interface au voisinage de l'emplacement des ferrures d'interface (222) et un motif (511) dit de ventre entre les ferrures d'interface, la zone de discontinuité de raidissement (520) se situant entre un motif de ferrure d'interface (512) et un motif de ventre (511) et ne comprenant aucun raidisseur lié à l'un de ces motifs.

3. Elément de voilure selon la revendication 2, dans lequel chaque motif (511, 512) de raidissement comprend des raidisseurs (211) dit de première catégorie, sensiblement parallèle à *x*, reprenant la flexion globale de la peau d'extrados, des raidisseurs (502) de deuxième catégorie reprenant la flexion et la torsion locales de la peau, et des raidisseurs (503) de troisième catégorie stabilisant la peau vis-à-vis du flambage local.

4. Elément de voilure selon la revendication 1, dans lequel la peau d'extrados de l'élément mobile de voilure comprend une tôle, et dans lequel les nervures et raidisseurs (211, 212, 502, 503) de la peau d'extrados (210) sont rapportés par un procédé de fabrication additive sur ladite tôle.

5. Elément de voilure selon la revendication 1, dans lequel, le longeron (220) de l'élément mobile de voilure est un profilé comprenant une semelle (303) côté intrados, une semelle (302) côté extrados et une âme (301) entre lesdites semelles, les semelles étant liées à la peau d'extrados (210) et dans lequel les semelles (302, 303) sont rapportées sur l'âme par un procédé de fabrication additive.

6. Elément de voilure selon la revendication 5, dans lequel le longeron (220) de l'élément mobile de voilure comprend des nervures rapportées sur l'âme (301) par un procédé de fabrication additive.

7. Elément de voilure selon la revendication 6, dans lequel l'élément mobile de voilure (200) est un bec mobile de bord d'attaque, la peau d'extrados se prolongeant jusqu'au bord d'attaque et dans lequel le longeron (220) comprend des raidisseurs (321, 322, 721, 722), côté bord d'attaque, sous la forme de demi-nervures réparties de manière alternée selon l'axe y et liées alternativement au côté extrados et au côté intrados de la peau d'extrados (210).

8. Elément de voilure selon la revendication 7, dans lequel les demi-nervures (321, 322, 721, 722) de l'élément mobile de voilure sont réparties selon l'axe y selon un pas variable augmentant dans un sens allant de l'emplanture de l'aile au saumon.

9. Elément de voilure selon la revendication 7, dans lequel les demi-nervures (721, 722) sont de forme biomimétique ajourée.

## Patentansprüche

1. Tragflächenelement eines Luftfahrzeugs, insbesondere ein Flügel, der ein bewegliches Tragflächenelement (200), insbesondere einen Vorflügel umfasst, der dem Tragflächenelement angepasst ist, und damit durch Schnittstellenbeschläge (222, 422) verbunden ist, wobei das Tragflächenelement im Laufe seiner Nutzung einer aerodynamischen Aufladung unterliegt, wobei das Luftfahrzeug einen Bezugspunkt definiert, der eine Rumpfhauptachse *x* und eine Spannweitenachse *y* umfasst, wobei das Tragflächenelement eine Auftriebskraft entlang einer Achse *z* vermittelt, die senkrecht zueinander sind, wobei sich das Tragflächenelement durch die Wirkung der aerodynamischen Aufladung hauptsächlich in der Form einer Biegung verformt, die eine Durchbiegung entlang der Achse *z,* und eine im Wesentlichen in der Ebene *y-z* verlaufende Verformung vermittelt, welche die Schnittstellenbeschläge (422, 222) entlang der Achse *z* verschiebt, eine Biegeverformung (401) des beweglichen Tragflächenelements durch die Wirkung der aerodynamischen Aufladung Ausbauchungen (602) zwischen den Schnittstellenbeschlägen (222, 422) als Durchbiegung parallel zu *z* bildet, wobei das bewegliche Tragflächenelement (200) aus einer Kastenstruktur gebildet wird, und eine gerippte saugseitige Haut (210) umfasst, die eine Hinterkantenhaut (213), einen Längsträger (220), der sich entlang der Achse *y* erstreckt, mit der saugseitigen Haut zusammengesetzt, eine Innenhaut (230), mit der Hinterkantenhaut und dem Längsträger zusammengesetzt, in dem sich Kästen, die durch Rippen (211), die entlang der Achse *y* verteilt sind, zwischen der Hinterkantenhaut und der unteren Haut erstrecken, wobei die Rippen mit den Rippen des Längsträgers (221) und den Schnittstellenbeschlägen (222) zur Verbindung mit dem Tragflächenelement zusammenwirken, **dadurch gekennzeichnet, dass** die Hinterkantenhaut (213) der saugseitigen Haut (210) durch Versteifungen (212) in biomimetischer Form versteift wird, die Versteifungsmotive (511, 512) umfasst, die über die gesamte Oberfläche der Hinterkantenhaut verteilt sind, wobei die Versteifungen derart konfiguriert sind, um zwischen zwei Rippen (211), die mit den Schnittstellenbeschlägen (222) verbunden sind, durch die so erhaltene Versteifung mindestens eine nicht versteifte Unterbrechungszone (520) einzurichten, die zwischen zwei voneinander getrennten Versteifungsmotiven gebildet wird, und in der Annullierungszone des Biegemoments (612) zentriert ist, das durch die aerodynamische Aufladung des Tragflächenelements hervorgerufen wird.

2. Tragflächenelement nach Anspruch 1, wobei die Versteifungen (212) in biomimetischer Form der Hinterkantenhaut (213) des beweglichen Tragflächenelements (200) entlang der Achse y organisiert sind, indem sich ein sogenanntes Schnittstellenbeschlagmotiv (512) in der Nähe der Stelle der Schnittstellenbeschläge (222) und ein sogenanntes Bauchmotiv (511) zwischen den Schnittstellenbeschlägen abwechseln, wobei sich die Versteifungsunterbrechungszone (520) zwischen einem Schnittstellenbeschlagmotiv (512) und einem Ausbauchungsmotiv (511) befindet und keine Versteifung in Verbindung mit einem dieser Motive umfasst.

3. Tragflächenelement nach Anspruch 2, wobei jedes Versteifungsmotiv (511, 512) sogenannte Versteifungen (211) erster Kategorie, im Wesentlichen parallel zu *x* umfasst, die die globale Biegung der saugseitigen Haut übernimmt, Versteifungen (502) zweiter Kategorie, die die lokale Biegung und Torsion der Haut übernehmen, und Versteifungen (503) dritter Kategorie, die die Haut gegen das lokale Knicken stabilisieren.

4. Tragflächenelement nach Anspruch 1, wobei die saugseitige Haut des beweglichen Tragflächenelements ein Blech umfasst, und wobei die Rippen und Versteifungen (211, 212, 502, 503) der saugseitigen Haut (210) durch ein additives Herstellungsverfahren auf dem Blech beigebracht werden.

5. Tragflächenelement nach Anspruch 1, wobei der Längsträger (220) des beweglichen Tragflächenelements ein Profil ist, das eine Sohle (303) auf der Saugseite, eine Sohle (302) auf der Druckseite, und einen Kern (301) zwischen den Sohlen umfasst, wobei die Sohlen mit der saugseitigen Haut (210) verbunden sind, und wobei die Sohlen (302, 303) durch ein additives Herstellungsverfahren auf dem Kern beigebracht sind.

6. Tragflächenelement nach Anspruch 5, wobei der Längsträger (220) des beweglichen Tragflächenelements durch ein additives Herstellungsverfahren beigebrachte Rippen auf dem Kern (301) umfasst.

7. Tragflächenelement nach Anspruch 6, wobei das bewegliche Tragflächenelement (200) ein Vorflügel ist, sich die saugseitige Haut bis zur Vorderkante fortsetzt, und wobei der Längsträger (220) Versteifungen (321, 322, 721, 722) auf Seiten der Vorderkante in Form von Halbrippen umfasst, die in abwechselnder Form entlang der Achse y verteilt sind, und abwechselnd an der Saugseite und an der Druckseite der saugseitigen Haut (210) verbunden sind.

8. Tragflächenelement nach Anspruch 7, wobei die Halbrippen (321, 322, 721, 722) des beweglichen Tragflächenelements entlang der Achse *y* entsprechend einer variablen Steigung verteilt sind, die in einer Richtung zunimmt, die von der Wurzel des Flügels bis zum Block verläuft.

9. Tragflächenelement nach Anspruch 7, wobei die Halbrippen (721, 722) in durchbrochener biomimetischer Form sind.

## Claims

1. An airfoil element, in particular a wing, comprising a movable airfoil element (200), in particular a leading edge slat, adapted to the airfoil element and connected to the latter by interface fittings (222, 422), which airfoil element is subjected during the use thereof to an aerodynamic loading, the aircraft defining a reference frame comprising a fuselage main axis x and a span axis y, the airfoil element providing lift along an axis z, perpendicular to each other, the airfoil element being deformed under the effect of the aerodynamic loading primarily in the form of a bending imparting a deflection along the axis z and a deformation substantially in the plane y-z moving the interface fittings (422, 222) along the axis z, the bending deformed shape (401) of the movable airfoil element under the effect of the aerodynamic loading forming archs (602) between the interface fittings (222, 422) with a deflection parallel to z, said movable airfoil element (200) consisting of a box structure and comprising a ribbed extrados skin (210) comprising a trailing edge skin (213), a spar (220) extending along the y axis assembled to the extrados skin, an internal skin (230) assembled to the trailing edge skin and to the spar, wherein boxes delimited by the ribs (211) distributed along the y axis, extending between the trailing edge skin and the internal skin, said ribs cooperating with ribs of the spar (221) and the interface fittings (222) for the connection with the wing, **characterised in that** the trailing edge skin (213) of the extrados skin (210) is stiffened by stiffeners (212) with a biomimetic shape comprising stiffening patterns (511, 512) distributed over the entire surface of the trailing edge skin, said stiffeners being configured so as to form, between two ribs (211) connected to the interface fittings (222), by the stiffening obtained in this manner, at least one discontinuity area (520), not stiffened, formed between two stiffening patterns separated from each other and centred on the area of cancellation of the bending moment (612) generated by the aerodynamic loading of the movable airfoil element.

2. The airfoil element according to claim 1, wherein the stiffeners (212) with a biomimetic shape of the trailing edge skin (213) of the movable airfoil element (200), are organised along the axis y by alternating a so-called interface fitting pattern (512) in the vicinity of the location of the interface fittings (222) and a so-called arch pattern (511) between the interface fittings, the stiffening discontinuity area (520) being located between an interface fitting pattern (512) and a arch pattern (511) and not comprising any stiffener connected to any of these patterns.

3. The airfoil element according to claim 2, wherein each stiffening pattern (511, 512) comprises so-called first category stiffeners (211), substantially parallel to x, taking up the overall bending of the extrados skin, second category stiffeners (502) taking up the local bending and torsion of the skin, and third category stiffeners (503) stabilizing the skin against local buckling.

4. The airfoil element according to claim 1, wherein the extrados of the movable airfoil element comprises a sheet metal, and wherein the ribs and stiffeners (211, 212, 502, 503) of the extrados skin (210) are affixed on said sheet metal by an additive manufacturing process.

5. The airfoil element according to claim 1, wherein the spar (220) of the movable airfoil element is a profile comprising a flange (303) on the intrados side, a flange (302) on the extrados side and a web (301) between said flanges, the flanges being connected to the extrados skin (210) and wherein the flanges (302, 303) are affixed on the web by an additive manufacturing process.

6. The airfoil element according to claim 5, wherein the spar (220) of the movable airfoil element comprises ribs affixed on the web (301) by an additive manufacturing process.

7. The airfoil element according to claim 6, wherein the movable airfoil element (200) is a movable leading edge slat, the extrados skin extending up to the leading edge and wherein the spar (220) comprises stiffeners (321, 322, 721, 722), on the leading edge side, in the form of half-ribs alternately distributed along the y axis and alternately connected to the extrados side and to the intrados side of the extrados skin (210).

8. The airfoil element according to claim 7, wherein the half-ribs (321, 322, 721, 722) of the movable airfoil element are distributed along the y axis according to a variable step increasing in a direction from the root of the wing to the tip.

9. The airfoil element according to claim 7, wherein the half-ribs (721, 722) have a perforated biomimetic shape.
